(19) Europäisches Patentamt
European Patent Office
Office européen des brevets

(11) **EP 2 196 767 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
***G01B 21/04*** *(2006.01)*    *B25J 9/16* *(2006.01)*

(21) Anmeldenummer: **09013798.5**

(22) Anmeldetag: **03.11.2009**

(54) **Verfahren und System zur Prüfung der Genauigkeit eines Sensors**

Method and system for testing the precision of a sensor

Procédé et système de vérification de l'exactitude d'un capteur

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.12.2008 DE 102008062043**

(43) Veröffentlichungstag der Anmeldung:
**16.06.2010 Patentblatt 2010/24**

(73) Patentinhaber: **KUKA Deutschland GmbH 86165 Augsburg (DE)**

(72) Erfinder:
• **Kaderk, Sebastian 86199 Augsburg (DE)**
• **Mittmann, Ralf 86415 Mering (DE)**
• **Groll, Michael 86167 Augsburg (DE)**

(74) Vertreter: **Schlotter, Alexander Carolus Paul Wallinger Ricker Schlotter Tostmann Patent- und Rechtsanwälte Partnerschaft mbB Zweibrückenstrasse 5-7 80331 München (DE)**

(56) Entgegenhaltungen:
**EP-A1- 1 528 353    WO-A2-00/15016**
**WO-A2-98/42171    DE-A1- 10 023 604**
**DE-A1- 19 854 011    DE-A1-102004 033 485**
**DE-U1-202005 005 864    US-A1- 2004 179 205**

**Beschreibung**

Die vorliegende Erfindung betrifft ein Verfahren und ein System zur Prüfung der Genauigkeit eines Sensors, insbesondere eines manipulatorgeführten, optischen Sensors.

Manipulatorgeführte optische Sensoren werden bislang im Rahmen der Inline-Messtechnik, etwa in der Qualitätssicherung, lediglich als Prüfhilfsmittel eingestuft, da die Prüfmittelfähigkeit bzw. -verwendbarkeit in der Regel nicht nachgewiesen ist. Ein Schritt bei einem solchen Nachweis umfasst die Prüfung der Messmittelfähigkeit des Sensors als solchem. Doch auch in anderen Bereichen ist die Prüfung der Genauigkeit eines Sensors von Interesse, beispielsweise in der Qualitätskontrolle bei der Sensorherstellung, einer Wareneingangskontrolle, bei der Instandhaltung oder einer Systemprüfmittelüberwachung (SPÜ).

Die Genauigkeit eines manipulatorgeführten optischen Sensors wird bislang nach betriebsinterner Praxis dadurch überprüft, dass die Position eines Merkmals, beispielsweise einer Kante eines Messobjektes, mit dem Sensor erfasst, anschließend das Messobjekt relativ zum Sensor definiert verschoben und seine neue Position durch den Sensor erneut erfasst wird. Durch Vergleich der Differenz der vom Sensor erfassten Positionen mit der bekannten Verschiebung, aus der diese Differenz resultiert, erhält man ein Maß für die Genauigkeit, mit der der Sensor die Position des Merkmals erfassen kann.

Prinzipiell muss ein Prüfmaß, beispielsweise ein Messnormal wie etwa ein Endmaß oder dergleichen, bzw. eine Auflösung deutlich genauer sein als das zu prüfende Maß. So wird beispielsweise in der Automatisation regelmäßig gefordert, dass die Auflösung eines Messinstrumentes höchstens 5% der Toleranz des zu prüfenden Maßes beträgt. Wendet man dieses Prinzip auf die vorstehend erläuterte betriebsinterne Praxis an, erfordert dies, dass die definierte Verschiebung von Messobjekt und Sensor relativ zueinander mit deutlich höherer Genauigkeit erfolgen muss als die zu prüfende Genauigkeit des Sensors. Die Einhaltung der oben exemplarisch genannten 5%-Grenze würde bei einer für die Messmittelfähigkeit zu prüfenden Genauigkeit von 30 $\mu$m eines optischen Sensors einer Positioniergenauigkeit von 1,5 $\mu$m entsprechen und somit die Positionergenauigkeit heutiger Industrieroboter, die im Bereich von etwa 0,3 mm liegt, um Größenordnungen übersteigen. Hieraus wird deutlich, dass mit dem nach betriebsinterner Praxis bekannten Verschiebeprüfung die Messmittelfähigkeit eines manipulatorgeführten optischen Sensors nicht darstellbar ist. Eine ähnliche Problematik ergibt sich auch bei der Prüfung anderer Sensoren.

Aus der DE 102 22 575 A1 ist ein Verfahren zur Überprüfung der DMIS ("Dimensional Measuring Interface Standard") -Fähigkeit CNC-geführter Koordinatenmessgeräte bekannt, bei der mit dem Taster einer Koordinatenmessmaschine Merkmale in unterschiedlichen Positionen angefahren werden. Auch hier ist entsprechend eine Verschiebung von Messobjekt und Taster relativ zueinander erforderlich, was im Gegensatz zu manipulatorgeführten optischen Sensoren aufgrund der Genauigkeit von Koordinatenmessmaschinen jedoch problemlos mit der erforderlichen Genauigkeit realisierbar ist.

Aus der EP 1 528 353 A1 ist ein Verfahren zum Kalibrieren eines 3D-Messgerätes bekannt, bei dem mehrere Merkmalskörper eines Referenzkörpers gemessen und aus den gemessenen Werten ein Maß für den Messfehler des 3D-Messgerätes in Abhängigkeit von der Position des Referenzkörpers in einem zu kalibrierenden Messvolumen und daraus eine Fehlerkorrekturfunktion ermittelt wird.

Aufgabe der vorliegenden Erfindung ist es, eine vorteilhafte Prüfung eines optischen Sensors, insbesondere eines manipulatorgeführten, optischen Sensors zu ermöglichen.

Diese Aufgabe wird durch ein Verfahren mit den Merkmalen des Anspruchs 1 bzw. ein Prüfsystem nach Anspruch 11 gelöst. Anspruch 12 bzw. 13 stellt ein Computerprogramm bzw. Computerprogrammprodukt zur Durchführung eines erfindungsgemäßen Verfahrens unter Schutz, die Unteransprüche betreffen vorteilhafte Weiterbildungen.

Nach einem erfindungsgemäßen Verfahren wird zunächst ein Ist-Abstand zwischen einem ersten und einem zweiten Merkmal eines Präzisions-Messobjektes bestimmt. Dies erfolgt in einer bevorzugten Ausführung mittels eines Prüfmittels, insbesondere mittels einer Koordinatenmessmaschine, wie sie beispielsweise in der einleitend genannten DE 102 22 575 A1 beschrieben ist. Hierdurch kann die Genauigkeit eines Prüfmittels indirekt zur Prüfung der Genauigkeit des Sensors genutzt werden. Die Merkmale, deren Ist-Abstand erfasst wird, können beispielsweise zwei Bohrungen in dem Präzisions-Messobjekt sein, deren maximaler, minimaler oder Mittelpunktsabstand zueinander durch den Taster einer Koordinatenmessmaschine bestimmt wird.

Vor- oder nachher wird derselbe Abstand auch mit dem zu prüfenden Sensor bestimmt. Hierzu wird der Sensor zur Erfassung des Präzisions-Messobjektes in eine Erfassungsposition ausgerichtet, indem beispielsweise das Präzisions-Messobjekt fixiert und der Sensor durch einen Manipulator, insbesondere einen Roboter, in der Erfassungsposition ausgerichtet werden. Gleichermaßen ist es möglich, den Sensor und das Präzisions-Messobjekt an einem Stativ in der Erfassungsposition zueinander auszurichten. Ein derart geprüfter Sensor kann vorteilhaft anschließend an einem Manipulator befestigt und so als manipulatorgeführter Sensor beispielsweise in einem Inline-Messsystem eingesetzt werden.

Nun werden erfindungsgemäß parallel oder nacheinander die Positionen des ersten und zweiten Merkmals des Präzisions-Messobjektes durch den Sensor erfasst, ohne hierbei die Erfassungsposition, i.e. die Position des Sensors relativ zum Präzisions-Messobjekt zu verändern. Hierdurch wird die Verschiebung von Messobjekt und Sensor relativ zueinander, die bislang nur mit großen Aufwand, etwa mittels Präzisions-Lineareinheiten, mit der erforderlichen Genauigkeit darstellbar ist oder deren mangelnde Präzision umgekehrt die Prüfung der für die Prüfmittelfähigkeit erforderlichen Genauigkeit des Sensors beeinträchtigt, unnötig.

Aus den erfassten Positionen des ersten und zweiten Merkmals wird dann ein Mess-Abstand bestimmt. Dabei kann, beispielsweise durch geeignete bildverarbeitende Verfahren, gleichermaßen zunächst die Positionen erfasst und durch Differenzbildung der Mess-Abstand bestimmt werden, oder der Mess-Abstand bestimmt werden, ohne die Positionen als solche separat, sonder nur indirekt zu erfassen. Auch eine solche indirekte Erfassung der Positionen im Rahmen einer direkten Bestimmung des Mess-Abstandes wird als Erfassen der Positionen des ersten und zweiten Merkmals des Präzisions-Messobjektes durch den Sensor im Sinne der vorliegenden Erfindung verstanden. Werden also beispielsweise durch eine Bilderkennung zwei voneinander beabstandete Kanten identifiziert und deren Abstand bestimmt, so umfasst auch dies im Sinne der vorliegenden Erfindung die (indirekte) Erfassen der Positionen der beiden Kanten relativ zueinander.

Nun kann auf Basis einer Differenz zwischen Ist- und Mess-Abstand eine Genauigkeit des Sensors bestimmt werden, beispielsweise als Differenz zwischen Ist- und Mess-Abstand, Betrag dieser Differenz, Kehrwert oder Logarithmus dieser Differenz oder dieses Betrages oder dergleichen.

Erfindungsgemäß ist die Anwendung der vorliegenden Erfindung die Prüfung optischer Sensoren, wobei hierunter sowohl Sensoren verstanden werden, die im sichtbaren Wellenlängenbereich des Lichts arbeiten, als auch Sensoren, die im unsichtbaren Wellenlängenbereich, insbesondere im Infrarot-, Ultraviolett- oder Röntgenbereich arbeiten.

Wird ein optischer Sensor, beispielsweise eine Kamera, insbesondere eine CCD-Kamera, geprüft, wird erfindungsgemäß die Position eines oder mehrerer Merkmale des Präzisions-Messobjektes mittels eines bildverarbeitenden Verfahrens erfasst. Dieses kann insbesondere eine Bild- oder Merkmalserkennung umfassen, welche eine vorgegebene Struktur in einem erfassten Bild erkennt. Erfindungsgemäß wird hierzu der Typ, etwa "Bohrung", "Kante" oder dergleichen, und/oder der Bereich, in dem die Bilderkennung nach dem Merkmal suchen soll, eingegeben. Dies erhöht die Flexibilität bei der Gestaltung des Präzisions-Messobjektes und die Effizienz bei der Erfassung seiner Merkmale.

Die Prüfgenauigkeit des erfindungsgemäßen Verfahrens kann in verschiedener Weise gesteigert werden, indem weitere Ist- und Messabstände berücksichtigt werden: Gemäß einer bevorzugten Ausführung wird zusätzlich ein Ist-Abstand zwischen dem ersten und einem weiteren Merkmal des Präzisions-Messobjektes bestimmt, die Position des weiteren Merkmals durch den in derselben Erfassungsposition ausgerichteten Sensor erfasst, und ein Mess-Abstand aus den erfassten Positionen des ersten und des weiteren Merkmals bestimmt. Die Genauigkeit des Sensors kann nun auf Basis der beiden Differenzen zwischen Ist- und Mess-Abstand zwischen dem ersten und dem zweiten Merkmal und zwischen dem ersten und dem weiteren Merkmal bestimmt werden, indem beispielsweise ein arithmetisches Mittel oder ein, insbesondere mit den absoluten Abständen gewichtetes, Mittel dieser beiden Differenzen gebildet oder die größere der beiden Differenzen zugrundegelegt wird. In gleicher Weise können noch die Abstände eines vierten, fünften oder noch weiterer Merkmale zum ersten Merkmal und/oder des weiteren Merkmals zum zweiten Merkmal berücksichtigt werden. Auf diese Weise können durch ein weiteres Merkmal des Präzisions-Messobjektes weitere Differenzen gebildet und bei der Bestimmung der Genauigkeit des Sensors berücksichtigt werden, um die Sicherheit und Präzision der Prüfung zu erhöhen.

Zusätzlich oder alternativ kann auch ein Ist-Abstand zwischen einem dritten Merkmal und einem weiteren Merkmal des Präzisions-Messobjektes bestimmt, die Position des dritten Merkmals und des weiteren Merkmals durch den in derselben Erfassungsposition ausgerichteten Sensor erfasst, und ein Mess-Abstand aus den erfassten Positionen des dritten und des weiteren Merkmals bestimmt werden. Die Genauigkeit des Sensors kann nun auf Basis der Differenzen zwischen Ist- und Mess-Abstand zwischen dem ersten und dem zweiten Merkmal und zwischen dem dritten und dem weiteren Merkmal bestimmt werden, indem wiederum beispielsweise ein arithmetisches Mittel oder ein, insbesondere mit den absoluten Abständen gewichtetes, Mittel dieser beiden Differenzen gebildet oder die größere der beiden Differenzen zugrundegelegt wird.

Zusätzlich oder alternativ kann nach dem Bestimmen des bzw. der Mess-Abstände der Sensor in eine neue Erfassungsposition zur Erfassung des Präzisions-Messobjektes ausgerichtet werden, indem Sensor und/oder Präzisions-Messobjekt verschoben werden, wobei die Genauigkeit dieser Verschiebung nicht von Bedeutung ist, da jeweils nur relative Abstände zwischen Merkmalen des Präzisions-Messobjektes bestimmt werden. Dann werden die Positionen der Merkmale durch den in derselben neuen Erfassungsposition ausgerichteten Sensor erfasst und der bzw. die Mess-Abstände zwischen den Merkmalen aus den erfassten Positionen bestimmt.

Die Genauigkeit des Sensors kann nun auf Basis der Differenzen zwischen Ist- und Mess-Abstand zwischen den Merkmalen in der ersten und der neuen Erfassungsposition bestimmt werden, indem wiederum beispielsweise ein arithmetisches Mittel oder ein, insbesondere mit den absoluten Abständen gewichtetes, Mittel dieser Differenzen gebildet oder die größere der beiden Differenzen zugrundegelegt wird.

Zusätzlich oder alternativ zur Bestimmung einer Genauigkeit auf Basis mehrerer Differenzen verschiedener Ist- und Mess-Abstände können zunächst auch Einzel- oder Gruppen-Genauigkeiten auf Basis einzelner Differenzen oder Untergruppen der Differenzen gebildet und hieraus, wiederum beispielsweise als arithmetisches oder gewichtetes Mittel oder als Maximalwert-Auswahl, eine Gesamt-Genauigkeit für den Sensor ermittelt werden.

Insbesondere die Bestimmung von Einzel-Genauigkeiten für verschiedene Erfassungspositionen ermöglicht es auch, die Genauigkeit des zu prüfenden Sensors bereichsweise zu bewerten. Wird beispielsweise der Sensor nacheinander in verschiedenen Erfassungspositionen derart ausgerichtet, dass der Mess-Abstand der erfassten Merkmale dabei in verschiedenen Abschnitten des Sichtbereichs des Sensors liegt, kann die Genauigkeit für die verschiedenen Abschnitte des Sichtbereichs einzeln bewertet werden.

Insbesondere in einer Bildverarbeitung können durch Triangulation, Auflichtverfahren oder dergleichen dreidimensionale Positionen, insbesondere im kartesischen Raum, und damit auch dreidimensionale Abstände erfasst werden, um die Genauigkeit von dreidimensionalen Sensoren zu prüfen. Vorteilhaft sind hierzu die Positionen der Merkmale sowohl in einer Erfassungsebene, beispielsweise der Bild- oder Brennpunktebene eines optischen Sensors, als auch senkrecht hierzu voneinander beabstandet. Weist ein Sensor eine Erfassungsachse, beispielsweise ein optischer Sensor eine optische Achse auf, so sind bevorzugt die Positionen der Merkmale entlang dieser als auch in einer Erfassungsebene senkrecht hierzu voneinander beabstandet.

Ein Merkmal kann beispielsweise eine Kante, eine Aussparung, insbesondere eine Durchgangs- oder Sacklochbohrung, ein Lang- oder Rechteckloch oder dergleichen, eine Erhebung, insbesondere einen, beispielsweise zylindrischen, kegelförmigen oder eckigen, Bolzen oder eine Markierung, insbesondere eine Farbmarkierung wie beispielsweise ein Barcode sein. Weist ein Merkmal in einer Bezugs- bzw. Erfassungsebene des Sensors einen zweidimensionalen Querschnitt auf, beispielsweise den kreis- oder ellipsenförmigen Umfang einer Bohrung, so kann seine Position beispielsweise durch den Flächenmittelpunkt oder derjenigen Punkt mit minimalem oder maximalen Abstand zu einem Bezugspunkt oder einer Bezugslinie definiert sein. Sind also beispielsweise das erste und zweite Merkmal Bohrungen, so kann der Abstand zwischen ihnen als Abstand der Kreismittelpunkte ihrer Ränder, aber auch als minimaler oder maximaler Abstand ihrer Ränder definiert sein.

Um die Prüfgenauigkeit zu erhöhen, ist es insbesondere bei solchen Merkmalen, die in einer Bezugsebene des Sensors zweidimensional sind, vorteilhaft, wenn der Ist-Abstand zwischen zwei Merkmalen wenigstens das doppelte, insbesondere wenigstens das dreifache und besonders bevorzugt wenigstens das fünffache einer Dimension oder charakteristischen Abmessung des Merkmals beträgt, beispielsweise des Durchmessers eines kreisförmigen Randes einer Bohrung oder der maximalen Seitenlänge einer rechteckförmigen Stirnfläche eines Bolzens.

Zu einem Prüfsystem nach der vorliegenden Erfindung gehören neben dem Präzisions-Messobjekt eine Positioniervorrichtung zum Ausrichten des Sensors zum Präzisions-Messobjekt sowie eine Prüfvorrichtung, die zur vorzugsweise automatisierten, Durchführung eines der vorstehend beschriebenen Verfahrens eingerichtet ist.

Weitere Vorteile und Merkmale ergeben sich aus den Unteransprüchen und den Ausführungsbeispielen. Hierzu zeigt, teilweise schematisiert:

Fig. 1A, 1B: ein Präzisions-Messobjekt in Drauf- (Fig 1A) und Seitansicht (Fig. 1B); und

Fig. 2: den Ablauf eines Verfahrens nach einer Ausführung der vorliegenden Erfindung.

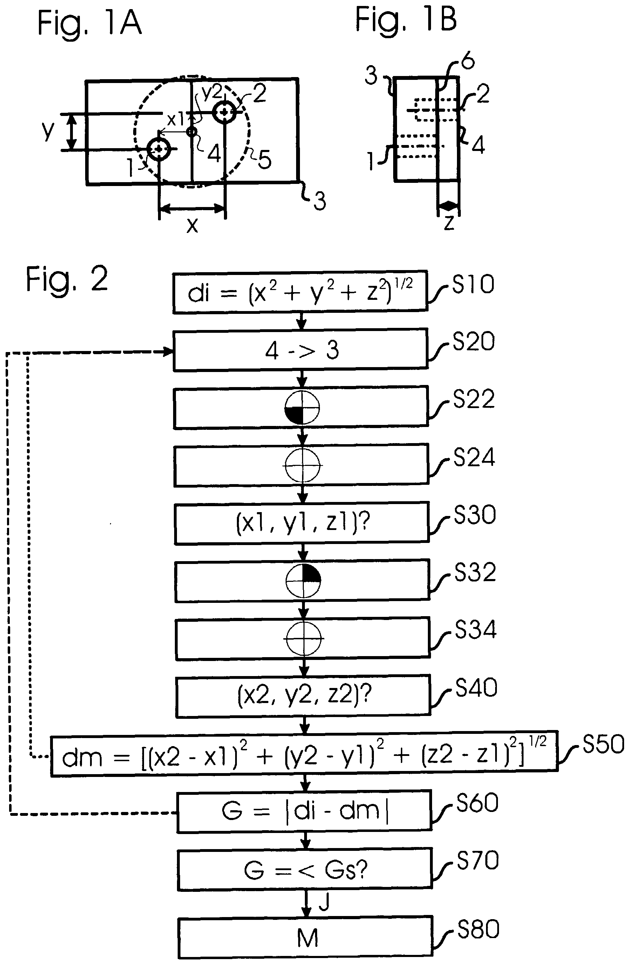

Fig. 1A zeigt ein Präzisions-Messobjekt 3 in der Draufsicht mit einem in der Seitansicht nach Fig. 1B erkennbaren Absatz 6 mit einer Höhe z. Es weist eine erste Bohrung 1 und eine zweite Bohrung 2 auf, die in horizontaler Richtung in der Draufsicht nach Fig. 1A einen Abstand x und in vertikaler Richtung einen Abstand y voneinander aufweisen. Die erste Bohrung 1 ist auf einem unteren Plateau des Werkstückes 3 ausgebildet, die zweite Bohrung 2 auf einem oberen Plateau, so dass die Mittelpunkte ihrer kreisförmigen Ränder in der Oberfläche des Werkstückes 3 einen kartesischen Abstand $d = \sqrt{(x^2 + y^2 + z^2)}$ aufweisen, der im Ausführungsbeispiel $d = \sqrt{[(4\times D)^2 + (3\times D)^2 + (2\times D)^2]} \approx 5{,}3 \times D$ beträgt, wobei D den Durchmesser der Bohrungen 1, 2 bezeichnet.

In einem ersten Schritt S10 wird dieser Abstand durch eine ausreichend genaue Koordinatenmessmaschine gemessen, die hierzu einen Ist-Abstand $d_i \approx d$ bestimmt.

Nun wird in einem Schritt S20 das Präzisions-Messobjekt 3 in einem Stativ fixiert (nicht dargestellt) und ein optischer Sensor (nicht dargestellt), beispielsweise durch Montage an dem Stativ oder Positionieren des robotergeführten Sensors mit einem Industrieroboter, zu dem Präzisions-Messobjekt 3 derart ausgerichtet, dass sein Fokus 4 in der Mitte zwischen beiden Bohrungen 1, 2 und beide Bohrungen innerhalb seines strich-doppelpunktiert angedeuteten Sichtbereiches 5 liegen.

Dann wird in einem Schritt S30 die Position (x1, y1, z1) des Mittelpunktes des kreisförmigen Randes der ersten Bohrung 1 im unteren Plateau des Werkstückes 3 erfasst. Hierzu wird in einer Bildverarbeitung in einem Schritt S22 das linke untere Segment als Bereich für die Position der durch die Bildverarbeitung zu erkennenden Bohrung und in einem Schritt S24 eine kreisringförmige Bohrung als Typ des durch die Bildverarbeitung zu erkennenden Merkmals eingegeben. Die Bildverarbeitung erfasst in der Folge die Position (x1, y1, z1) in einem sensorfesten Koordinatensystem, wobei zur Verdeutlichung in Fig. 1A die Koordinate x1 eingetragen ist.

In entsprechender Weise wird in den Schritten S32, S34 und S40 die Position (x2, y2, z2) des Mittelpunktes des kreisförmigen Randes der zweiten Bohrung 2 erfasst, wobei zur Verdeutlichung in Fig. 1A die Koordinate y2 eingetragen ist.

Nun wird in einem Schritt S50 ein Mess-Abstandes dm zwischen dem ersten und dem zweiten Merkmal 1, 2 aus den erfassten Positionen (x1, y1, z1), (x2, y2, z3) des ersten und zweiten Merkmals 1, 2 gemäß

$$ dm = \sqrt{[(x2-x1)^2 + (y2-y1)^2 + (z2-z1)^2]} $$

bestimmt und hieraus in einem Schritt S60 einer Genauigkeit G des Sensors gemäß

$$ G = |di - dm| $$

als Betrag der Differenz zwischen Ist- und Mess-Abstand di, dm bestimmt.

In einem Schritt S70 wird diese Genauigkeit mit einer für die Messmittelfähigkeit des optischen Sensors beispielsweise nach einer Norm erforderlichen oder der vom Hersteller angegebenen und somit für eine Warenabnahme erforderlichen Genauigkeit Gs verglichen. Ist die in Schritt S60 ermittelte Genauigkeit besser als die erforderliche Genauigkeit, ist also im Ausführungsbeispiel der Wert G kleiner oder gleich Gs, ("J" in-Schritt S70), so wird festgestellt, dass der Sensor die Prüfung bestanden hat.

In einer in Fig. 2 strichliert dargestellte Abwandlung werden, nachdem in Schritt S60 die Genauigkeit G für die in Fig. 1A durch den Fokus 4 angedeutete Erfassungsposition ermittelt worden ist, Sensor und Präzisions-Messobjekt gegeneinander verschoben, und anschließend die Schritte S20 bis S60 für eine neue Erfassungsposition wiederholt. Auf diese Weise wird für unterschiedliche Positionen zwischen Sensor und Präzisions-Messobjekt je eine Genauigkeit G ermittelt, ohne dass dabei die Präzision der Verschiebung in die neue Erfassungsposition eine Rolle spielt, da die Merkmale 1, 2 jeweils beide in derselben (neuen) Erfassungsposition erfasst werden.

Aus dieser Mehrzahl von Genauigkeiten G kann beispielsweise ein Mittelwert gebildet oder ein Maximalwert ausgewählt und als Gesamt-Genauigkeit definiert werden. Gleichermaßen ist es auch möglich, durch ein- oder mehrfaches Durchlaufen der Schritte S20 bis S60 einen Relativbereich für die Erfassungsposition des Sensors zu ermitteln, in dem der Sensor eine ausreichende Genauigkeit zeigt.

Anstelle der Bestimmung mehrerer Genauigkeiten für verschiedene Erfassungspositionen kann in einer weiteren, in Fig. 2 punktiert dargestellten Abwandlung auch der Mess-Abstand dm für verschiedene Erfassungspositionen ermittelt werden. Auch hieraus kann, beispielsweise durch Mittelwertbildung oder Maximalwert-Auswahl, eine statistische Gesamtgenauigkeit oder ein zulässiger Erfassungspositionenbereich bestimmt werden.

## Bezugszeichenliste

| | |
|---|---|
| 1 | Bohrung (erstes Merkmal) |
| 2 | Bohrung (zweites Merkmal) |
| 3 | Präzisions-Messobjekt |
| 4 | Fokus des optischen Sensors |
| 5 | Sichtbereich des optischen Sensors |
| 6 | Absatz des Präzisions-Messobjektes |

| | |
|---|---|
| x1, y2 | Koordinaten im Sensorbezugssystem |
| x, y, z | Abstandskomponenten zwischen Bohrungsrandmittelpunkten |
| di | Ist-Abstand |
| dm | Mess-Abstand |

## Patentansprüche

1. Verfahren zur Prüfung der Genauigkeit eines Sensors mit den Schritten:

a) Bestimmen (S10) eines Ist-Abstandes (di) zwischen einem ersten und einem zweiten Merkmal (1, 2) eines Präzisions-Messobjektes (3);

b) Ausrichten (S20) des Sensors zur Erfassung des Präzisions-Messobjektes in eine Erfassungsposition;

c) Erfassen (S30) der Position (x1, y1, z1) des ersten Merkmals (1) des Präzisions-Messobjektes (3) durch den in der Erfassungsposition ausgerichteten Sensor;

d) Erfassen (S40) der Position (x2, y2, z2) des zweiten Merkmals (2) des Präzisions-Messobjektes (3) durch den in derselben Erfassungsposition ausgerichteten Sensor, ohne die Position des Sensors relativ zu dem Präzisions-Messobjekt zu verändern;

e) Bestimmen (S50) eines Mess-Abstandes (dm) zwischen dem ersten und dem zweiten Merkmal (1, 2) aus den erfassten Positionen (x1, y1, z1, x2, y2, z2) des ersten und zweiten Merkmals (1, 2); und

f) Bestimmen (S60) einer Genauigkeit (G) des Sensors auf Basis einer Differenz zwischen Ist- und Mess-Abstand,

wobei der Sensor eine Kamera ist und die Position eines Merkmals des Präzisions-Messobjektes in Schritt c) und/oder d) mittels eines bildverarbeitenden Verfahrens erfasst wird, das die Eingabe eines Merkmaltyps und/oder eines Bereichs für die Position des Merkmals umfasst (S22, S24, S32, S34).

**2.** Verfahren nach Anspruch 1, **dadurch gekennzeichnet, dass** in Schritt a) der Ist-Abstand mittels eines Prüfmittels, insbesondere einer Koordinatenmessmaschine bestimmt wird.

**3.** Verfahren nach einem der vorhergehenden Ansprüche, **dadurch gekennzeichnet, dass** in Schritt b) der Sensor durch einen Manipulator, insbesondere einen Roboter, in der Erfassungsposition ausgerichtet wird; oder dass in Schritt b) der Sensor und das Präzisions-Messobjekt an einem Stativ in der Erfassungsposition ausgerichtet werden.

**4.** Verfahren nach einem der vorhergehenden Ansprüche, **dadurch gekennzeichnet, dass** der Sensor ein manipulatorgeführter Sensor ist.

**5.** Verfahren nach einem der vorhergehenden Ansprüche, **dadurch gekennzeichnet, dass** die Schritte b) bis e), insbesondere b) bis f) für mehrere Erfassungspositionen wiederholt werden.

**6.** Verfahren nach einem der vorhergehenden Ansprüche, **dadurch gekennzeichnet, dass**:

> in Schritt a) ein Ist-Abstand zwischen dem ersten oder einem dritten Merkmal und einem weiteren Merkmal des Präzisions-Messobjektes bestimmt wird;
> die Position des weiteren Merkmals des Präzisions-Messobjektes und
> gegebenenfalls des dritten Merkmals durch den in derselben Erfassungsposition ausgerichteten Sensor erfasst wird;
> ein Mess-Abstand aus den erfassten Positionen des ersten bzw. dritten und des weiteren Merkmals bestimmt wird; und
> in Schritt f) die Genauigkeit des Sensors auch auf Basis einer Differenz zwischen Ist- und Mess-Abstand zwischen dem ersten bzw. dritten und dem weiteren Merkmal bestimmt wird.

**7.** Verfahren nach einem der vorhergehenden Ansprüche, **gekennzeichnet durch** die Schritte:

> g) Vergleichen (S70) der in Schritt f) bestimmten Genauigkeit (G) des Sensors mit einer erforderlichen Genauigkeit (Gs); und
> h) Feststellen der Messmittelfähigkeit (M) des Sensors (S80), falls die in Schritt f) bestimmte Genauigkeit wenigstens gleich der erforderlichen Genauigkeit ist.

**8.** Verfahren nach einem der vorhergehenden Ansprüche, **dadurch gekennzeichnet, dass** der erfasste Ist- und Mess-Abstand einen dreidimensionalen Abstand, insbesondere im kartesischen Raum, umfasst; und/oder dass die Positionen des ersten und zweiten Merkmals sowohl in einer Erfassungsebene des Sensors als auch senkrecht hierzu voneinander beabstandet sind.

**9.** Verfahren nach einem der vorhergehenden Ansprüche, **dadurch gekennzeichnet, dass** das erste und/oder zweite Merkmal eine Kante, eine Aussparung, insbesondere eine Bohrung, eine Erhebung, insbesondere einen Bolzen, und/oder eine Markierung, insbesondere eine Farbmarkierung umfasst.

**10.** Verfahren nach einem der vorhergehenden Ansprüche, **dadurch gekennzeichnet, dass** der Ist-Abstand zwischen dem ersten und einem zweiten Merkmal eines Präzisions-Messobjektes wenigstens das doppelte, insbesondere wenigstens das dreifache einer Dimension des Merkmals beträgt.

**11.** Prüfsystem zur Prüfung der Genauigkeit eines manipulatorgeführten Sensors, mit:

> einem Präzisions-Messobjekt (3);
> einer Positioniervorrichtung zum Ausrichten des Sensors zum Präzisions-Messobjekt in eine Erfassungsposition; und
> einer Prüfvorrichtung zum Bestimmen einer Genauigkeit (G) des Sensors auf Basis einer Differenz (di - dm) zwischen einem Ist- und einem Mess-Abstand (di, dm) zwischen einem ersten und einem zweiten Merkmal (1, 2) des Präzisions-Messobjektes, wobei
> der Sensor eine Kamera ist und die Prüfvorrichtung zur Durchführung eines Verfahrens nach einem der vorhergehenden Ansprüche eingerichtet ist.

**12.** Computerprogramm, das ein Verfahren nach einem der Ansprüche 1 bis 10 ausführt, wenn es in einer Prüfvorrichtung nach Anspruch 11 abläuft.

**13.** Computerprogrammprodukt mit Programmcode, der auf einem maschinenlesbaren Träger gespeichert ist und ein Computerprogramm nach Anspruch 12 umfasst.

**Claims**

**1.** A method of testing the accuracy of a sensor, the method comprising the steps of:

> a) determining (S10) an actual distance (di) between a first and a second feature (1, 2) of a precision measurement object (3);
> b) aligning (S20) the sensor for detecting the precision measurement object in a detection position;
> c) detecting (S30) the position (x1, y1, z1) of the first feature (1) of the precision measurement object (3) by means of the sensor aligned in the detection position;

d) detecting (S40) the position (x2, y2, z2) of the second feature (2) of the precision measurement object (3) by means of the sensor aligned in the same detection position without changing the position of the sensor relative to the precision measurement object;

e) determining (S50) a measurement distance (dm) between the first and the second feature (1, 2) from the detected positions (x1, y1, z1, x2, y2, z2) of the first and the second feature (1, 2); and

f) determining (S60) an accuracy (G) of the sensor on the basis of a difference between the actual distance and the measurement distance,

wherein the sensor is a camera, and the position of a feature of the precision measurement object is detected in step c) and/or d) by means of an image processing method which comprises the input of a type of feature and/or of a region for the position of the feature (S22, S24, S32, S34).

2. The method according to claim 1, **characterized in that** the actual distance is determined in step a) by means of a testing means, in particular a coordinate measurement machine.

3. The method according to any one of the preceding claims, **characterized in that**, in step b), the sensor is aligned in the detection position by means of a manipulator, in particular a robot; or that, in step b), the sensor and the precision measurement object are aligned in the detection position with respect to a tripod.

4. The method according to any one of the preceding claims, **characterized in that** the sensor is a manipulator guided sensor.

5. The method according to any one of the preceding claims, **characterized in that** the steps b) to e), in particular b) to f), are repeated for several detection positions.

6. The method according to any one of the preceding claims, **characterized in that**:

in step a), an actual distance is determined between the first or a third feature and a further feature of the precision measurement object; the position of the further feature of the precision measurement object and, if applicable, the third feature are detected by means of the sensor aligned in the same detection position; a measurement distance is determined from the detected positions of the first or third feature and the further feature; and

in step f), the accuracy of the sensor is determined also on the basis of a difference between the actual distance and the measurement distance between the first or third feature and the further feature.

7. The method according to any one of the preceding claims, **characterized by** the steps of:

g) comparing (S70) the accuracy (G) of the sensor determined in step f) with a required accuracy (Gs); and

h) establishing (S80) the suitability (M) of the sensor as a measurement means if the accuracy determined in step f) is at least equal to the required accuracy.

8. The method according to any one of the preceding claims, **characterized in that** the detected actual distance and the measurement distance comprises a three-dimensional distance, in particular in the Cartesian space; and/or that the positions of the first and second features are spaced from each other in a detection plane of the sensor, as well as perpendicular thereto.

9. The method according to any one of the preceding claims, **characterized in that** the first and/or second feature comprises an edge, a recess, in particular a bore, a protrusion, in particular a bolt, and/or a mark, in particular a color mark.

10. The method according to any one of the preceding claims, **characterized in that** the actual distance between the first and a second feature of a precision measurement object is at least twice as big as a dimension of the feature, in particular at least three times as big as a dimension of the feature.

11. A testing system for testing the accuracy of a manipulator guided sensor, comprising:

a precision measurement object (3);
a positioning device for aligning the sensor with respect to the precision measurement object in a detection position; and
a testing device for determining an accuracy (G) of the sensor on the basis of a difference (di - dm) between an actual distance and a measurement distance (di, dm) between a first and a second feature (1, 2) of the precision measurement object, wherein
the sensor is a camera and the testing device is arranged for carrying out a method according to any one of the preceding claims.

**12.** A computer program which carries out a method according to any one of the claims 1 to 10 when it is run on a testing device according to claim 11.

**13.** A computer program product with program code which is stored on a machine readable carrier and which comprises a computer program according to claim 12.

**Revendications**

**1.** Procédé de vérification de la précision d'un capteur avec les étapes de :

a) détermination (S10) d'une distance réelle (di) entre une première et une seconde caractéristique (1, 2) d'un objet de mesure de précision (3) ;

b) orientation (S20) du capteur pour la détection de l'objet de mesure de précision dans une position de détection ;

c) détection (S30) de la position (x1, y1, z1) de la première caractéristique (1) de l'objet de mesure de précision (3) par le capteur orienté dans la position de détection ;

d) détection (S40) de la position (x2, y2, z2) de la seconde caractéristique (2) de l'objet de mesure de précision (3) par le capteur orienté dans la même position de détection, sans modifier la position du capteur par rapport à l'objet de mesure de précision ;

e) détermination (S50) d'une distance mesurée (dm) entre la première et la seconde caractéristique (1, 2) à partir des positions détectées (x1, y1, z1, x2, y2, z2) des premier et seconde caractéristiques (1, 2) ; et

f) détermination (S60) d'une précision (G) du capteur sur la base d'une différence entre la distance réelle et la distance mesurée,

dans lequel le capteur est une caméra et la position d'une caractéristique de l'objet de mesure de précision à l'étape c) et/ou à l'étape d) est détectée au moyen d'un procédé de traitement d'images qui comporte l'entrée d'un type de caractéristique et/ou d'une zone pour la position de la caractéristique (S22, S24, S32, S34).

**2.** Procédé selon la revendication 1, **caractérisé en ce que**, à l'étape a), la distance réelle est déterminée à l'aide d'un moyen de vérification, en particulier d'une machine de mesure de coordonnées.

**3.** Procédé selon l'une quelconque des revendications, **caractérisé en ce que**, à l'étape b), le capteur est orienté dans la position de détection par un manipulateur, en particulier un robot ; ou **en ce que**, à l'étape b), le capteur et l'objet de mesure de précision sont orientés dans la position de détection sur un support.

**4.** Procédé selon l'une quelconque des revendications précédentes, **caractérisé en ce que** le capteur est un capteur guidé par un manipulateur.

**5.** Procédé selon l'une quelconque des revendications précédentes, **caractérisé en ce que** les étapes b) à e), en particulier b) à f) sont répétées pour plusieurs positions de détection.

**6.** Procédé selon l'une quelconque des revendications précédentes, **caractérisé en ce que** :

à l'étape a), une distance réelle est déterminée entre la première ou une troisième caractéristique et une autre caractéristique de l'objet de mesure de précision ;

la position de l'autre caractéristique de l'objet de mesure de précision et, le cas échéant, de la troisième caractéristique est détectée par le capteur orienté dans la même position de détection ;

une distance mesurée est déterminée à partir des positions détectées de la première ou de la troisième et de l'autre caractéristique ; et

à l'étape f), la précision du capteur est également déterminée sur la base d'une différence entre la distance réelle et la distance mesurée entre la première ou la troisième et l'autre caractéristique.

**7.** Procédé selon l'une quelconque des revendications précédentes, **caractérisé par** les étapes de :

g) comparaison (S70) de la précision (G) du capteur, déterminée à l'étape f) avec une précision requise (Gs) ; et

h) constatation de l'aptitude du moyen de mesure (M) du capteur (S80) si la précision déterminée à l'étape f) est au moins égale à la précision requise.

**8.** Procédé selon l'une quelconque des revendications précédentes, **caractérisé en ce que** la distance réelle et la distance mesurée détectée présentent une distance tridimensionnelle, en particulier dans l'espace cartésien ; et/ou **en ce que** les positions des première et deuxième caractéristiques sont écartées l'une de l'autre aussi bien dans un plan de détection du capteur que perpendiculairement à ce plan.

**9.** Procédé selon l'une quelconque des revendications précédentes, **caractérisé en ce que** la première et/ou la deuxième caractéristique comporte un bord, un évidement, en particulier un forage, une surélévation, en particulier un écrou, et/ou un marquage, en particulier un marquage coloré.

10. Procédé selon l'une quelconque des revendications précédentes, **caractérisé en ce que** la distance réelle entre la première et la seconde caractéristique d'un objet de mesure de précision est au moins le double, en particulier au moins le triple, d'une dimension de la caractéristique.

11. Système de vérification pour la vérification de la précision d'un capteur guidé par un manipulateur, avec :

un objet de mesure de précision (3) ;
un dispositif de positionnement pour orienter le capteur vers l'objet de mesure de précision dans une position de détection ; et
un dispositif de vérification pour la détermination d'une précision (G) du capteur sur la base d'une différence (di - dm) entre une distance réelle et une distance mesurée (di, dm) entre une première et une deuxième caractéristique (1, 2) de l'objet de mesure de précision, dans lequel le capteur est une caméra et le dispositif de vérification est agencé pour l'exécution d'un procédé selon l'une quelconque des revendications précédentes.

12. Programme d'ordinateur, qui exécute un procédé selon l'une quelconque des revendications 1 à 10 lorsqu'il se déroule dans un dispositif de vérification selon la revendication 11.

13. Produit-programme d'ordinateur avec un code de programme qui est enregistré sur un support lisible par machine et comporte un programme d'ordinateur selon la revendication 12.

## Fig. 1A

## Fig. 1B

## Fig. 2

$$di = (x^2 + y^2 + z^2)^{1/2}$$ S10

4 -> 3 S20

S22

S24

$$(x1, y1, z1)?$$ S30

S32

S34

$$(x2, y2, z2)?$$ S40

$$dm = [(x2 - x1)^2 + (y2 - y1)^2 + (z2 - z1)^2]^{1/2}$$ S50

$$G = |di - dm|$$ S60

$$G =< Gs?$$ S70

J

M S80

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10222575 A1

- EP 1528353 A1